Europäisches Patentamt

European Patent Office

Office européen des brevets

(19)

(11) Veröffentlichungsnummer: **0 297 253 B1**

(12) # EUROPÄISCHE PATENTSCHRIFT

(45) Veröffentlichungstag der Patentschrift:
**12.12.90**

(51) Int. Cl.⁵: **F02B 23/02, F02B 77/04**

(21) Anmeldenummer: **88107463.7**

(22) Anmeldetag: **10.05.88**

(54) Brennstoffeinspritzventilanordnung in einer Hubkolbenbrennkraftmaschine.

(30) Priorität: **01.07.87 CH 2496/87**

(43) Veröffentlichungstag der Anmeldung:
**04.01.89 Patentblatt 89/1**

(45) Bekanntmachung des Hinweises auf die Patenterteilung:
**12.12.90 Patentblatt 90/50**

(84) Benannte Vertragsstaaten:
**DE FR GB IT NL**

(56) Entgegenhaltungen:
**DE-A- 2 001 518
DE-A- 3 528 804
DE-C- 531 695
FR-A- 2 517 374
GB-A- 2 096 700

PATENT ABSTRACTS OF JAPAN, Band 7,
Nr. 199 (M-240)[1344], 3. September 1983,
Seite 64 M 240; & JP-A-58 98 624 (MITSUBISHI
JUKOGYO K.K.) 11-06-1983
PATENT ABSTRACTS OF JAPAN, Band 11,
Nr. 44 (M-560)[2491], 10. Februar 1987, Seite 61 M 560; &
JP-A-61 207 816 (HIROICHI IKEDA) 16-09-1986**

(73) Patentinhaber: **GEBRÜDER SULZER
AKTIENGESELLSCHAFT, Zürcherstrasse 9,
CH-8401 Winterthur(CH)**

(72) Erfinder: **Meier, Kuno, CH-8483 Brünggen(CH)**

(74) Vertreter: **Sparing Röhl Henseler Patentanwälte
European Patent Attorneys, Rethelstrasse 123,
D-4000 Düsseldorf 1(DE)**

ACTORUM AG

## Beschreibung

Die Erfindung betrifft eine Brennstoffeinspritzventilanordnung in einer Hubkolbenbrennkraftmaschine mit den Merkmalen des Oberbegriffs des Anspruchs 1.

Bei einer bisherigen Anordnung dieser Art (DS-OS 3 528 804) sind im Zylinderdeckel muldenartige Vertiefungen ausgebildet, in die jeweils ein Düsenkopf mit den Spritzöffnungen ragt. Durch diese Ausbildung liegt jeder Düsenkopf quasi im "Windschatten" vor der Drallströmung geschützt und ist damit dem Bereich der höchsten Brennraumtemperatur entzogen. Jeder Düsenkopf liegt also in einer relativ kühlen Zone, in der die Oberflächentemperatur des Düsenkopfes aus einen Wert gehalten werden kann, der unterhalb der Schmelztemperatur der nichtbrennbaren Bestandteile des Brennstoffs liegt, so dass ein Ansetzen unverbrannter Bestandteile am Düsenkopf verhindert wird. Damit wird die Gefahr einer Hochtemperaturkorrosion des Düsenkopfes eliminiert, und zwar auch dann, wenn Einspritzventile mit ungekühltem Düsenkopf verwendet werden. Die muldenartigen Vertiefungen werden normalerweise nachträglich in den Zylinderdeckel spanabhebend eingearbeitet, was mit erheblichem Kostenaufwand verbunden ist, und zwar auch deshalb, weil die Vertiefungen mit Rücksicht auf die Brennstoffstrahlbildung, die sie nicht behindern dürfen, eine bearbeitungsmässig komplizierte Formgebung aufweisen.

Der Erfindung liegt die Aufgabe zugrunde, eine Anordnung der eingangs genannten Art dahingehend zu verbessern, dass sie bei gleichwertiger Windschattenwirkung wesentlich einfacher hergestellt werden kann.

Diese Aufgabe wird erfindungsgemäss durch die Merkmale des Kennzeichens des Anspruchs 1 gelöst.

Durch das Vorsehen einer Erhebung vor jedem Düsenkopf liegt auch dieser quasi im "Windschatten" vor der Drallströmung geschützt. Die dem Brennraum zugewendete Fläche des Zylinderdeckels wird jedoch normal spanabhebend bearbeitet und es werden dann durch Auftragschweissen die Erhebungen auf die Fläche aufgebracht. Dies ist wesentlich weniger kostenaufwendig als das Anbringen der muldenartigen Vertiefungen beim bekannten Zylinderdeckel. Ein weiterer Vorteil der neuen Anordnung besteht darin, dass es nunmehr auch möglich ist, die Erhebungen im Zylinderdeckel von Brennkraftmaschinen noch anzubringen, die schon im Betrieb gestanden sind.

Die Erfindung wird anhand eines in der Zeichnung schematisch dargestellten Ausführungsbeispiels erläutert. Es zeigen:

Fig. 1 eine Teilinnenansicht eines Zylinderdeckels mit einer erfindungsgemässen Einspritzventilanordnung,

Fig. 2 in vergrösserter Darstellung einen Teilschnitt entsprechend der Linie II-II in Fig. 1 des Zylinderdeckels mit zugehörigen Teilen der Kolbenbrennkraftmaschine,

Fig. 3. eine Draufsicht einer Erhebung in grösserem Masstab und

Fig. 4 eine Seitenansicht der Erhebung nach Fig. 3

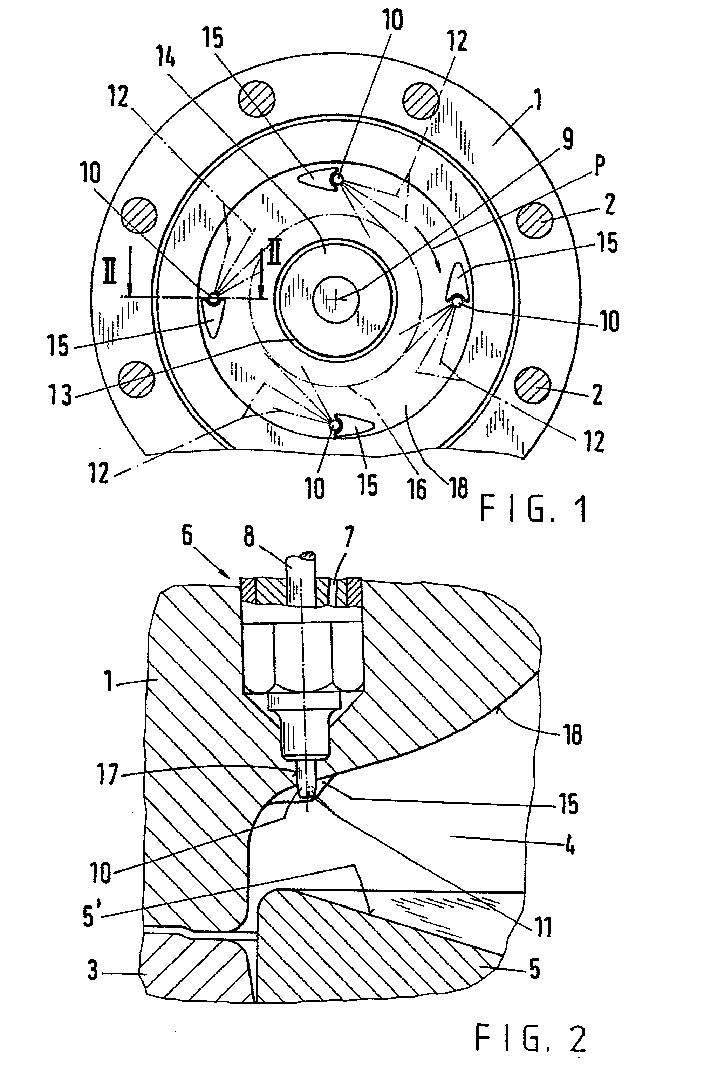

Das Ausführungsbeispiel nach Fig. 1 bis 4 ist an einem längsgespülten Zweitakt-Dieselmotor angewendet.

Der Zylinderdeckel 1 gemäss Fig. 1 und 2 ist mit Hilfe von Schrauben 2 an einem Zylindereinsatz 3 der Kolbenbrennkraftmaschine befestigt. Er überspannt den Zylindereinsatz 3, in dem ein auf- und abwärts bewegter Kolben 5 dichtend geführt ist. Der Kolben 5 begrenzt in seiner in der Fig. 2 dargestellten obersten Stellung zusammen mit dem Zylinderdeckel 1 einen Brennraum 4, in den vier Einspritzventile 6 Brennstoff einspritzen, wozu sie an ein gemeinsames, nicht dargestelltes Brennstoffversorgungssystem angeschlossen sind. Die den Brennraum 4 begrenzende Bodenfläche 5′ des Kolbens 5 ist gegenüber dem Kolbenrand etwas vertieft und bildet die Mantelfläche eines stumpfen Kegels.

Die Einspritzventile 6 sind im peripheren Bereich des Zylinderdeckels 1 bezüglich der Längsachse 9 des Zylindereinsatzes 3 rotationssymmetrisch gegeneinander um jeweils 90° versetzt im Deckel 1 angeordnet. Sie weisen je einen Bennstoffzuführkanal 7, eine mit einem kegeligen, nicht dargestellten Ventilsitz zusammenwirkende Ventilnadel 8 und einen in den Brennraum 4 ragenden Düsenkopf 10 auf. Jeder Düsenkopf 10 ist in einer Durchtrittsbohrung 17 des Zylinderdeckels 1 geführt und sein in den Brennraum 4 ragender Abschnitt weist mehrere Spritzöffnungen 11 auf. Die Spritzöffnungen 11 jedes Düsenkopfes 10 sind so gerichtet, dass die aus ihnen austretenden Brennstoffstrahlen 12 in ungefähr zur Kolbenbodenfläche 5′ parallelen ebenen und im wesentlichen in gleicher Richtung wie die Drallströmung (Pfeil P in Fig. 2) der im Brennraum befindlichen Verbrennungsluft verlaufen. Die Resultierende der jeweils aus einem Düsenkopf 10 austretenden Brennstoffstrahlen 12 verläuft im wesentlichen tangential zu einem zur Längsachse 9 des Zylinders konzentrischen, gedachten Kreis 16, dessen Radius kleiner ist als der Abstand des jeweiligen Düsenkopfes von der Längsachse 9. Der Zylinderdeckel 1 ist mit einem zentralen Ventilsitz 13 und einem mit diesem zusammenwirkenden Auslassventil 14 versehen, das nach jedem Arbeitstakt öffnet und dadurch den Brennraum 4 mit einer nicht dargestellten Auspuffanlage der Kolbenbrennkraftmaschine verbindet.

Die den Brennraum 4 begrenzende Fläche 18 des Zylinderdeckels 1 ist eine zur Längsachse 9 zentrische Rotationsfläche. An der Fläche 18 sind vier Erhebungen 15 vorgesehen, die - in Richtung der Drallströmung gesehen - je einem Düsenkopf 10 vorgelagert ist.

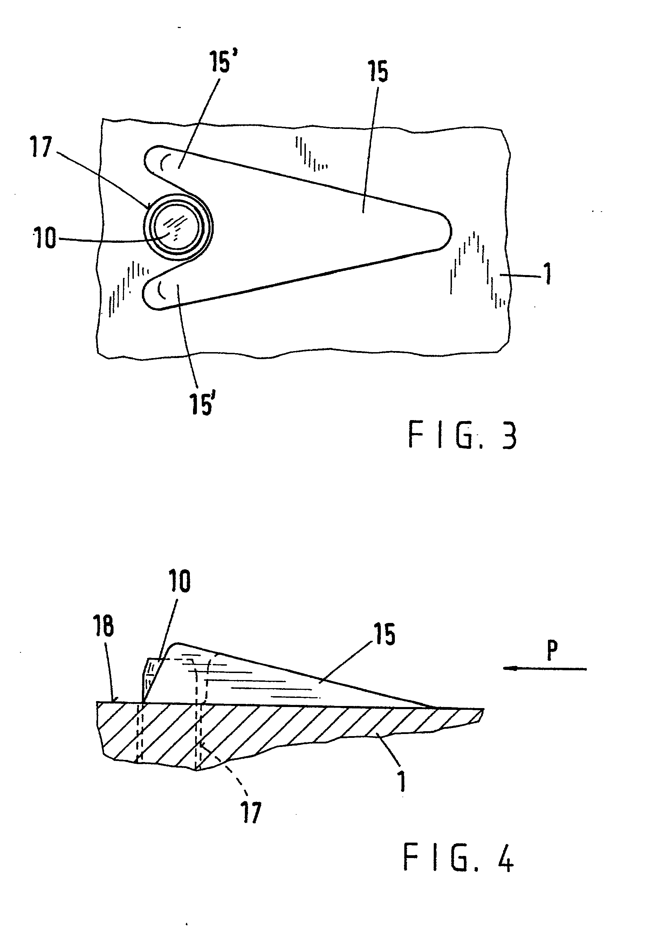

Wie sich aus Fig. 4 ergibt, haben die Erhebungen 15 im Prinzip Rampenform, die von der Begrenzungsfläche 18 ausgehend, zum Düsenkopf 10 hin allmählich ansteigt und nach Erreichen des höchsten Punktes steil zur Fläche 18 abfällt. Die grösste Höhe der Erhebung 15 ist etwas grösser als die in den Brennraum 4 ragende Länge des Düsenkopfes 10, so dass die in Richtung des Pfeiles P gegen die Erhebung 15 strömende Verbrennungsluft den Düsenkopf 10 nicht berührt. In Richtung des Pfeiles P ist die Erhebung 15 beiderseits des Düsenkopfes 10 noch etwas verlängert (Abschnitt 15') und um dessen Umriss herumgezogen, so dass der Düsenkopf knapp über die Hälfte seiner Umfangsfläche von der Erhebung umgeben ist (Fig. 3).

Die Erhebung 15 ist z.B. durch Auftragschweissen auf die fertig bearbeitete Fläche 18 aufgebracht worden. Die einzelnen Auftragschichten sind in Fig. 4 durch die horizontalen Linien angedeutet. Dieses Verfahren erlaubt es auch, die erfindungsgemässen Erhebungen noch nachträglich, d.h. bei schon in Betrieb gestandenen Brennkraftmaschinen, anzubringen.

Durch die Erhebungen 15 wird die Wärmeübertragung von den Verbrennungsgasen auf die hinter den Erhebungen angeordneten und damit ausserhalb der höchsten Temperatur befindlichen Düsenköpfe entsprechend verringert. Bei der dargestellten Ausführungsform der Erhebungen 15 werden also der von den Düsenöffnungen 11 freie Umfangsbereich der Düsenköpfe 10 jeweils durch die diesen Bereich umschliessenden Abschnitte 15' gegen die Verbrennungsgase abgeschirmt.

Die erfindungsgemässe Anordnung ist auch für andere Ausführungsformen des Zylinderdeckels geeignet, z.B. solche ohne Auslassventil.

## Patentansprüche

1. Brennstoffeinspritzventilanordnung in einer Hubkolbenbrennkraftmaschine mit mindestens einem von einem Zylinderdeckel überdeckten Zylinder, in dem ein Kolben geführt ist, der mit dem Zylinderdeckel einen Brennraum begrenzt, mit mindestens zwei im Zylinderdeckel und ausserhalb von dessen Zentrum angeordneten Brennstoffeinspritzventilen, die je einen in den Brennraum ragenden Düsenkopf mit Spritzöffnungen aufweisen, über die taktweise Brennstoff in den Brennraum gelangt, wobei die in den Spritzöffnungen gebildeten Brennstoffstrahlen in Richtung einer im Brennraum herrschenden Drallströmung der Verbrennungsluft gerichtet sind, dadurch gekennzeichnet, dass an der den Brennraum begrenzenden Fläche des Zylinderdeckels eine ebenfalls in den Brennraum ragende, in Richtung der Drallströmung vor jedem Düsenkopf angeordnete, zu diesem hin allmählich ansteigende Erhebung vorgesehen ist, deren grösste Höhe mindestens gleich der in den Brennraum ragenden Länge des Düsenkopfes ist und deren Breite mindestens gleich der Breite des Düsenkopfes – quer zur Drallrichtung gemessen – ist, und dass jede Erhebung aus durch Auftragschweissen auf dem Zylinderdeckel aufgebrachtem Werkstoff besteht.

2. Anordnung nach Anspruch 1, dadurch gekennzeichnet, dass das dem Düsenkopf benachbarte Ende jeder Erhebung beidseits etwas um den Düsenkopf herum verlängert ist und diese Verlängerungen ebenfalls die grösste Höhe der Erhebung aufweisen.

## Claims

1. A fuel injection valve arrangement in a reciprocating internal combustion engine, comprising at least one cylinder covered by a cylinder head and, guided in the cylinder, a piston which together with the cylinder head defines a combustion chamber, and also comprising at least two fuel injection valves which are disposed in and outside the centre of the cylinder head and which each have projecting into the combustion chamber a nozzle head with injection ports via which fuel passes cyclically into the combustion chamber, the fuel jets formed in the injection ports being directed in the same direction as a swirl flow in the air for combustion in the combustion chamber, characterised in that a rise gradually sloping towards the nozzle head and disposed in front of latter as considered in the direction of the swirl flow is provided on that surface of the cylinder head which defines the combustion chamber, into which it also projects, the maximum height of said rise being at least equal to the nozzle head length projecting into the combustion chamber and the width of said rise being at least equal to the width of the nozzle head measured transversely of the swirl direction, and in that each rise consists of material applied to the cylinder head by build-up welding.

2. An arrangement according to claim 1, characterised in that the end of each rise adjacent the nozzle head is extended somewhat around the nozzle head on both sides and these extensions also have the maximum rise height.

## Revendications

1. Dispositif à soupapes d'injection de carburant dans un moteur à combustion interne à piston alternatif, constitué d'au moins un cylindre recouvert d'une culasse et dans lequel coulisse un piston qui délimite, avec la culasse, une chambre de combustion, comportant au moins deux soupapes d'injection de carburant disposées dans la culasse en dehors de son centre et possédant chacune une tête d'injecteur saillant à l'intérieur de la chambre de combustion et pourvue de trous gicleurs par lesquels du carburant est injecté en cadence dans la chambre de combustion, les jets de carburant formés dans les trous gicleurs étant dirigés dans le sens d'un courant tourbillonnaire régnant dans la chambre de combustion, caractérisé par le fait que la face de la culasse qui délimite la chambre de combustion porte un bossage saillant également à l'intérieur de la chambre de combustion, placé, dans le sens du courant tourbillonnaire, avant chaque tête d'injecteur et montant progressivement vers celle-ci, dont la hauteur maximale est au moins égale à la longueur de la tête d'injecteur en saillie à l'intérieur de la chambre de combustion, et dont la largeur mesurée transversalement au courant tourbillonnaire – est au moins égale à celle de la tête d'injecteur, et par le fait que chacun des bossages est réalisé par soudage par apport de matière sur la culasse.

2. Dispositif selon la revendication 1, caractérisé par le fait que l'extrémité de chaque bossage voisine de la tête d'injecteur est prolongée des deux côtés à peu près tout autour de la tête d'injecteur, et ces prolongements présentent également la hauteur maximale du bossage.

F I G. 1

F I G. 2

FIG. 3

FIG. 4